(19) Europäisches Patentamt
European Patent Office
Office européen des brevets

(11) **EP 3 312 223 B1**

(12) **EUROPEAN PATENT SPECIFICATION**

(45) Date of publication and mention
of the grant of the patent:
**19.05.2021 Bulletin 2021/20**

(21) Application number: **15896491.6**

(22) Date of filing: **01.10.2015**

(51) Int Cl.:
***C08J 11/04*** (2006.01)      ***C10G 1/02*** (2006.01)
***C10B 53/07*** (2006.01)      ***B01J 21/06*** (2006.01)

(86) International application number:
**PCT/UA2015/000091**

(87) International publication number:
**WO 2016/209194 (29.12.2016 Gazette 2016/52)**

(54) **METHOD FOR THERMALLY DECOMPOSING POLYETHYLENE AND POLYPROPYLENE WASTE**

VERFAHREN ZUR THERMISCHEN ZERSETZUNG VON POLYETHYLEN- UND POLYPROPYLENABFALL

PROCÉDÉ DE DESTRUCTION THERMIQUE DE DÉCHETS DE POLYÉTHYLÈNE ET DE POLYPROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2015 UA 201506121**

(43) Date of publication of application:
**25.04.2018 Bulletin 2018/17**

(73) Proprietor: **SIA "Green Clarity"**
**1026 Riga (LV)**

(72) Inventors:
• **BONDARENKO, Oleksandr Mykolaiovych**
**Kyiv 04060 (UA)**
• **MOLCHANOV, Vladimir Ivanovich**
**Saki city, Republic of Crimea 296500 (RU)**

(74) Representative: **Zaboliene, Reda**
**Metida**
**Business center Vertas**
**Gyneju str. 16**
**01109 Vilnius (LT)**

(56) References cited:
**EP-A1- 2 327 485          WO-A2-2013/187788**
**BY-C1- 13 123             UA-U- 45 455**
**US-A1- 2003 019 789       US-A1- 2012 097 518**

**Description**

**THE FIELD OF THE INVENTION**

The device refers to the methods for plastic industrial and domestic waste utilization, particularly polyethylene (hereinafter referred to as PE) and polypropylene (hereinafter referred to as PP) waste, namely to the technical means of thermal and thermocatalytic destruction of the specified wastes by periodic or continuous mode, their disposal, and recycling of motor fuels (gasoline, diesel fuel), heating oil, hydrocarbon gas and carbon residue (coke).

**PRIOR ART**

One of the most important problems currently facing the world community is the problem of environmental pollution with polymer materials waste, in particular PE and PP plastics.

Until recently, storage of such wastes at municipal solid waste (MSW) landfills or simple burning were the main methods of their disposal. In other words, traditional waste treatment includes calcining or dumping without initial sorting and separate processing depending on the types of disposed waste. Obviously, such disposal of waste pollutes the environment.

Among the types of waste, it is plastic waste which becomes the main means of pollution due to their natural diversity and gradual accumulation. Traditional disposal of plastic waste includes calcining, or otherwise sorting for recovery. At the same time, calcination process (method) consists in direct burning of plastic waste, while sorting process (method) for subsequent recovery includes sorting of plastic waste and recovery of disposed plastic.

The first method (calcination) refers exclusively to engineering consumption, which requires expensive equipment to prevent the formation of secondary sources of environmental threats, such as air pollution. At the same time, the recovery method has the problem of processing complexity because of the wide variety of types of recyclable plastic and additives that it contains. Also, the reduced physical and mechanical properties of disposed and recovered products often make the recovery process impractical.

However, the above-mentioned methods do not solve the problem of environmental pollution, since in the case of waste disposal at landfills (at the disposal site), for most polymer materials, there are simply no microorganisms capable of converting (reprocessing) them into environmental friendly substances. At burning, a significant amount of gaseous and solid waste is formed, which, in its turn, should also be disposed of.

A number of secondary use methods of PE and PP are known. In most of these methods, various techniques and devices for secondary forming of products from plastics waste are used. The main disadvantage of these methods is that mechanical properties of products from secondary plastics are deteriorated by 15-20 % compared to the original products [A. S. Klinkov, P. S. Belyaiev, M. V. Sokolov Utilization and recycling of polymer materials: teaching guide. - Tambov: Publishing house of Tambov State Technical University, 2005. - 80 p. *(КлиНкоβА.С., Беляеβ П.С., Соколоβ М.В. утилизация и βторичНая переработка полимерНых материалоβ: учеб. пособие. - Тамбоβ: Изд-βо Тамб. гос. техН. уН-та, 2005. - 80 с.)*].

Among the known technologies, it is worthwhile to highlight pyrolysis, which is a method of controlled thermal decomposition of source raw material in the absence of oxygen. As a result of pyrolysis processing of raw material, we obtain the conforming products: boiler (heating) fuel (is used for its intended purpose and for obtaining components of diesel (gasoline) fraction in the presence of a rectification column); pyrolysis gas (is used as a fuel for the device operation); dry carbon residue of the 4th hazard class (is used for local, construction and reclamation needs, and is also fed to the concrete mixes as a filler); heat released during the processing (is used for the premises heating).

Pyrolysis is a combination of elementary reactions of organic substances decomposition (breaking down) into products with a lower molecular mass. The reactions proceed both sequentially and in parallel, and are inextricably interconnected.

Nowadays there is a number of pyrolysis classifications, namely:

- *dry pyrolysis* (in the absence of oxygen) and *oxidative pyrolysis* (with a partial burning of waste or as a result of direct processing of waste by combustion gases);
- *low-temperature pyrolysis* (300-550 oC), aimed mainly at obtaining liquid fraction products;
- *medium-temperature pyrolysis* (550-800 oC), aimed at obtaining products of all fractions;
- *high-temperature pyrolysis* (over 900 oC), aimed at obtaining gaseous process products;
- *pyrolysis* implemented in the devices of cyclic *(periodic)* and *continuous action.*

However, in the CIS countries, including Russia and Ukraine, the process of waste recycling by means of pyrolysis method is not widespread yet. The reason for this is, firstly, the difficulty in operating the technologies and equipment presented on the market of the CIS countries, and secondly, the lack of experience of the local producers that do not guarantee the operation of the devices, and thirdly, the lack of efficient pyrolysis technologies and devices, implementing these technologies. The result is a high cost of foreign analogs.

A method for disposing PE waste is known [Method for secondary polyethylene recycling, patent for invention RU 2106365, IPC C08J11/04, application No. 93011365/04 dated March 25, 1993, published on March 10, 1998 *(Способ переработки вторичного полиэтилена, патент на изобретение RU 2106365, МПК C08J11/04, Заявка №93011365/04 от 25.03.1993, опубл. 10.03.1998)]* according to which the pre-ground PE is fractionated in a boiling solvent into a soluble sol fraction and an insoluble gel fraction with separation and washing of the fractionation products, and then low-temperature pyrolysis in vacuum is carried out separately for each fraction.

The main disadvantage of this method is the use of toxic solvents in disposal technology, as well as multiple stages of the disposal process.

Methods for recycling of polymeric materials waste products into valuable organic substances are known. One of such methods is the thermal and thermocatalytic destruction of polymers waste into carbon fractions, which, after appropriate treatment, can be used as a high-quality motor fuel [Thermal destruction of waste pyrolysis http://i-pec.ru/wp-content/uploads/2014/01/Термическая-Деструкция- отходов-пиролиз.pdf].

A number of methods for thermoplastics waste processing are known. They are implemented with the help of appropriate devices, which are thus a part of these methods. For example, a method for thermoplastics waste processing and the device for its implementation are known. According to this method, pyrolysis is carried out in the reactor at a temperature of 480-600 oC and a pressure of 0.1-0.15 MPa, and the liquid phase is separated from the vapor-gas mixture by two-steps air condensation. Upon that, in the first stage the gas-vapor mixture is cooled at temperatures from 280-320 °C at the beginning of condensation and up to 110-120 °C at the end of condensation, with a subsequent separation of high-boiling components of liquid fuel and paraffins, and in the second stage the vapor-gas mixture is cooled up to the temperature of 50-60 °C with a subsequent separation of low-boiling components of liquid fuel. The device is equipped with a feeder for the continuous supply of raw material [Patent 2459843 RF, IPC7 C08J11/04, B29B17/00, F23G5/027. Method for thermoplastics waste processing and the device for its implementation/Yu. N. Shapovalov, A. N. Ulyanov, V. A. Andreyev, P. Yu. Salikov and others; application No. 20100151482/02; submitted on December 15, 2010; published on August 27, 2012, bulletin No. 24 *(Пат. 2459843 РФ, МПК7 C08J11/04, B29B17/00, F23G5/027. Способ переработки отходов термопластов и установка для его реализации / Шаповалов Ю.Н., Ульянов А.Н., Андреев В.А., Саликов П.Ю. и др.; Заявка №2010151482/02; Заявл. 15.12.2010; Опубл. 27.08.2012, Бюл. №24)]*.

The disadvantage of this device is the absence of fractionating equipment, which allows obtaining precise fractions of liquid hydrocarbons, such as gasoline, diesel fuel, and heating oil.

Device for thermal destruction of PP and PE waste is known. It consists of a thermal destruction reactor, a heating unit, a heat exchangers unit and a rectification column, on the basis of which the similar method is implemented [Method of thermal destruction of polyethylene and polypropylene waste, utility model patent UA 77844, IPC (2013.01) C10G1/00, C10B53/00, F22G5/027, application No. u201210850 dated September 17, 2012, published on February 25, 2013, bulletin No. 4 *(Способ термиечской деструкции отходов полиэтиена и полипропилена, патент на полезную модель UA 77844, МПК (2013.01) C10G1/00, C10B53/00, F22G5/027, Заявка №u201210850 от 17.09.2012, опубл. 25.02.2013, Бюл. №4)]*.

The disadvantage of the known device is its operation in the periodic mode, as a result of which heat is consumed for heating the equipment after stopping for coke unloading and raw material loading into the reactor, and the proportion of unqualified products generated during the device starts and stops increases. Besides, with such a typical (commonly accepted) design of the rectification column, when all products are produced in one column in one pass and the column is refluxed with a cooled overhead (in this case, with gasoline), fractionating of hydrocarbons from a vapor-gas mixture containing up to 20% of inert hydrocarbon gases is extremely difficult.

A method and apparatus for waste processing are known. They include waste sorting, isolating light plastic waste and their cracking, gradual cooling of cracking products, separating gaseous hydrocarbons and subsequent fractional distillation of liquid hydrocarbons. The apparatus of this invention includes: a garbage trolley transporting waste and unloaded onto the conveyor belt for waste transporting to the chopper equipped with a mill on which the waste is ground. The above-mentioned mill can generate high wind energy, which can reduce moisture and land content in waste by spraying waste depending on its relative weight. The device also includes four cracking furnaces, incinerator, cooling water piping, black oil fuel supply line, oil gas line, gas burner and other typical elements [Processes and apparatus for energy recovery through waste sorting and calcining, US 005998682A dated December 07, 1999, IPC (1999) C01G1/00, C07C1/00, application No. 09/182647 dated October 30, 1998 (Про*ц*ессЫ и аппараТура для ВоссТаноВ*л*еНия эНерГии через сорТ*И*роВку и прока*л*ВаН*И*е оТхо*Д*оВ, паТеНТ US 005998682А ОТ 07.12.1999, МПК (1999) С01G1/00, С07С1/00, За*я*Вка №09/182647 ОТ 30.10.1998)].

The disadvantage of this method is the device operation periodic scheme used, according to which the cracking furnaces switch on in sequence, going through "plastic waste loading - plastics cracking - cracking furnace cooling - coke discharge" stages, as a result of which an increased fuel consumption occurs for the next reheating of the cooled cracking furnace at the beginning of the next cycle of the device operation. Besides, due to the long idle time of the cracking furnaces at the cooling stage (longer than the actual cracking process time), it is necessary to implement a scheme with an increased number of cracking furnaces (four) to create a continuous operation cycling of the device, that will increase the device cost. The disadvantage is that hydrocarbons are cooled after cracking, the hydrocarbon gas is separated, then it is reheated to 450 °C and fractionation of the hydrocarbon mixture is carried out. This leads to double consumption of fuel (for heating) and water (for cooling the products). The disadvantage of the invention is also that cracking is carried out at an increased pressure of 0.4 MPa, that makes the cost of installation, in which the process is carried out, much higher.

Device for plastic waste pyrolysis is known. It contains a heating furnace, a metal retort, a gas burner, a device for continuous raw material loading and coke residue unloading, and a condenser for liquid hydrocarbons is known [Device for plastic waste pyrolysis, utility model patent UA 22609, IPC (2007) C10G9/28, F23G7/00, application No. u200612719 dated December 04, 2006, published on April 25, 2007, bulletin No. 5 (*У*строй ство *для* пиро*л*иза п*л*астико*в*ых отхо*д*ов, паtelecHm Ha по*л*е3Ну*Ю* мо*д*ель UA 22609, МПК(2007) C10G9/28, F23G7/00, За*я*Вка №*u*200612719 от 04.12.2006, опу*бл.* 25.04.2007, *Б*юл. *№* 5)].

The disadvantage of this device is that liquid hydrocarbons are not fractionated to obtain marketable products, that reduces the economic effect of operating this plant.

Device for continuous thermal disposal of organic waste is known. It contains a pyrolysis reactor with a heating system, a loading and unloading device, and a condensation unit with water cooling. [Device for continuous thermal disposal of organic waste with a liquid fuel obtaining, utility model patent UA 50431, IPC (2007) C10G1/00, F23G5/027, application No. u200912544 dated December 03, 2009, published on June 10, 2010, bulletin No. 11 (*У*стаНо*в*ка *для* Непреры*в*Ной тер*м*ической ут*л*ии3а*ц*ии ор*г*аНических, отхо*д*ов с по*л*учеНие*м* *ж*и*д*ко*г*о топ*л*и*в*а, паteleCHm Ha по*л*е3Ну*Ю* мо*д*ель UA 50431, МП(2007) C10G1/00,F23G5/027, За*я*Вка №*u*200912544 от 03.12.2009, опу*бл.* 10.06.2010, *Б*юл. *№* 11)].

The disadvantage of this device is that all the condensed heavy fractions are returned back to the reactor, where they are reheated, re-condensed, and subjected to destruction again. This leads to significant fuel costs for heating and increases the refrigerant (water) consumption for cooling. In addition, the device does not allow the separation of diesel and gasoline fractions, as follows from the list of products obtained: the plant allows obtaining only liquid fuel, an analog of diesel fuel (and in fact it is a mixture of diesel and gasoline fractions).

The closest to the claimed invention in technical essence is a method of organic raw material thermal destruction, which includes loading the initial raw material into the pyrolysis furnace, thermal decomposition of the initial raw material without access of air with a vapor-gas mixture obtaining, rectification of the vapor-gas mixture with gas mixture and liquid fuel evolution. Besides the vapor-gas mixture discharging from the pyrolysis furnace is subject to catalytic reforming. Highly porous oxymolybdenum and oxycobalt granules filling 9/10 of the catalyst column chamber volume are used as a catalyst. Reforming the vapor-gas mixture over the catalyst is conducted at a temperature of 420-510 °C and a pressure of 0.03 MPa at a volume velocity ranging from 1 to 6.

The gas-vapor mixture coming from the pyrolysis furnace to the catalyst column is enriched with fresh hydrogen at a pressure of 0.05 MPa at a rate of 6 weight percent per hour per 1 ton of raw material, loaded into the pyrolysis furnace.

The above-mentioned method for thermal destruction of organic raw material is implemented at the device, containing a furnace and a pyrolysis chamber with a hatch for raw material loading and solid residue unloading, a gas burner, a coil pipe for reheating the pyrolysis products, a condenser for pyrolysis products cooling, a catalyst column, a rectification column with condensers and an additional equipment [Method for thermal destruction of organic raw material, utility model patent UA 45455, IPC (2009) C10G1/00, application No. u20090583 dated June 09, 2009, published on November 10, 2009, bulletin No. 11 (*Способ* тер*м*иеской *д*естру*кц*ии ор*г*аНическо*г*о сыр*ь*Я, паteleCHm Ha по*л*е3Ну*Ю*м о*д*ель UA 45455, МПК (2009) C10G1/00, За*я*Вка №*u*20090583 om 09.06.2009, . 10.11.2009, *Б*юл. *№* 11)].

Low efficiency and cost-effectiveness of carrying out the process of thermal destruction of organic raw material are the disadvantages of this method. This is due to the fact that, according to the technological mode used, double heating and two-fold cooling of the destruction products are carried out during a single operation cycle of the device (from raw material loading to solid residue unloading), that lead to significant fuel costs for heating and cooling agent (water) costs for cooling. Besides, during the periodic operation of the device it is very difficult to achieve synchronous operation of the rectification column with the pyrolysis furnace, that affects the quality of the finished products - gasoline and diesel fuel. The use of expensive substances (oxymolybdenum and oxycobalt granules) as catalysts, as well as an increased consumption of hydrogen for the process (6% by weight of the loaded raw material), leads to an increase in the cost of the process.

Both in the periodic and continuous modes of thermal and thermocatalytic destruction of plastics wastes the invention is based on the task of improving the method, including increasing the efficiency and energy efficiency of the process of organic raw materials (in particular polyethylene and polypropylene) disposal by thermal destruction method, quality improvement and increase in finished products yield - gasoline and diesel fuel, by using effective regime parameters and procedures at the main stages of the method implementation, in particular, at the fractionation stage.

## DISCLOSURE OF THE INVENTION

The specified technical task is ensured by the fact that in the method of thermal destruction of polyethylene and polypropylene waste, implemented in both periodic and continuous modes of the above-mentioned plastics waste processing, and which includes loading of pre-crushed and impurities-free waste of the above-mentioned plastics in a pyrolysis furnace containing a thermal destruction reactor and a furnace with a fuel burner, their heating with a fuel burner in a thermal destruction reactor within 450 - 480 °C, thermal decomposition of the initial crushed and purified raw material in the thermal destruction reactor without air access, resulting in the thermal destruction of the vapor-gas mixture at the outlet from the reactor, feeding it to the catalyst column, besides after the degradation products fractionating, gas and liquid fuel are obtained, subsequently cooling of the fractionated products in heat exchangers and unloading coke from the thermal destruction reactor. Upon that the gasoline and water formed are separated due to the differences in their densities, and separation of the liquid components and hydrocarbon gas from the vapor-gas mixture of hydrocarbons formed in the process of thermal destruction is carried out in stages. *The new is that* in a periodic mode no less than two thermal destruction reactors are used. They are used in sequence during the operation, and in this case firing with a fuel burner is performed with a portable one, and after disconnecting the hot furnace from the thermal destruction reactor, the latter is put into a cooling mode with a possibility of cooling with air supplied from the burner gas-blower or fan, simultaneously connecting still hot furnace to the second cold thermal destruction reactor. During the thermal destruction reactor heating, preheating and maintaining the preset temperature is ensured in the boiler of the hydrocarbon collecting tank and in the boiler of the rectification column cube by supplying fuel gases, formed from the fuel burning in thermal destruction reactor fuel burner. Upon that the supply of fuel gas, formed from the fuel burning, is stopped when temperature in the collecting tank reaches 300-360 °C, and in the rectification column tank temperature is maintained within 160-220 °C and controlled by changing the temperature of the vapor-gas mixture after dewaxer and at the top of the rectification column. Upon that the separation or fractionation of the liquid components from the vapor-gas mixture of hydrocarbons formed in the process of thermal destruction is carried out in four stages. At the first stage, high-boiling components of the vapor-gas mixture are condensed in the heat exchanger, cooled with water at a temperature of 300-360 °C, which is regulated by changing the water supply to the heat exchanger. At the second stage, paraffins are condensed in the column serving as the dewaxer, at a temperature of 180-300 °C, which is regulated by feeding water to the dewaxer dephlegmator, wherein the condensed high-boiling hydrocarbons and paraffins forming the heating fuel fraction are maintained in the collecting tank at a temperature of 300-360 °C, providing stripping of light fractions. At the third stage, the fractions of gasoline and diesel fuel are divided in the rectification column, providing a temperature mode within 35-100 °C at the top of the rectification column, and 160-220 °C at the bottom of the rectification column. At the fourth stage, gasoline and water vapors are condensed in the heat exchanger at a temperature of 20-35 °C. Upon that the heterogeneous catalyst is used as a catalyst in the form of titanium strands twisted in spiral, besides each spiral is preturned in one or in different directions, forming in the second case left and right rotation spirals. Besides, strands turned with a spiral in one direction each, or turned all with spirals in different directions each, are used. Titanium strands are placed in the collecting tank, in the tubes of a heat exchanger, where high-boiling components of a vapor-gas mixture are condensed, in the tubes of the dewaxer dephlegmator and in the tubes of the rectification column dephlegmator.

Supply of fuel gases with a temperature of 600-900 oC to the boiler of hydrocarbons collecting tank and to the rectification column cube is carried out.

The volume of the collecting tank is selected according to the condition under which the heating fuel dwelling time in the form of hydrocarbons mixture in it was sufficient to ensure complete stripping of the light fractions.

When operating in a periodic mode, the volume of the hydrocarbons collecting tank is determined from the correspondence:

$$V_p = 2 \cdot Q_p,$$

where $Q_p$ is the heating fuel capacity of the device in a single operation cycle, m³/cycle; $V_p$ is the volume of the hydrocarbons collecting tank, m³.

When operating in a continuous mode, the volume of the hydrocarbons collecting tank is determined from the correspondence:

$$V_n = 2 \cdot Q_n,$$

where $Q_n$ is the heating fuel capacity of the device per one hour, m³/hour; $V_n$ is the volume of the hydrocarbons collecting tank, m³.

Titanium strands are used with a width of 5 - 20 mm, a thickness of 0.5 - 1.5 mm, which in the twisted form have a diameter of 10 - 30 mm, a length of 0.1 - 1 m, with a spiral pitch of 10 - 40 mm.

Titanium spirals are preliminary treated during 0.5 - 1 hour
by contacting with 1 - 2% hydrofluoric acid at a temperature of 30 - 40 oC.

Titanium strands twisted in spiral are used as a mass-exchanging caps in the dewaxer and in the rectification column.

The dewaxer is made in the form of column apparatus, the bottom of which is filled with both regular and irregular mass-exchanging cap, made in the form of titanium spirals and having a free opening of 90 - 93%.

Irregular mass-exchanging cap is performed in the form of titanium spirals loaded in bulk, with a spiral length of 0.1 - 0.2 m.

Regular mass-exchanging cap is performed in the form of titanium spirals collected in cassettes, with titanium spirals length of up to 1 m.

On the top of the dewaxer a shell-and-tube heat exchanger is installed, which serves as a dephlegmator, and at the hydrocarbon vapors lifting up the dewaxer tubes where titanium spirals of different rotation direction are pre-arranged, conditions for paraffins condensation and draining down along them are provided with creation a reflux stream, with a help of which the mass-exchanging cap irrigation is in its turn provided.

The contents of the thermal destruction reactor are heated at a rate of 1.5 - 4 oC/minute. Pyrolysis is carried out in a thermal destruction reactor at a pressure of 0.01 - 0.07 MPa.

The listed characteristics form the essence of the technical solution.

The presence of cause and effect relationship between the set of technical solution essential features and the achieved technical result is as follows.

The supply of fuel gases with a temperature of 600 - 900 oC to the boiler of the hydrocarbons collecting tank (heating fuel fraction) and the rectification column cube allows preliminary heating of the collecting tank and rectification column cube to operating temperatures and faster (by 20 - 30% on average) achieving the scheduled mode by the device.

This significantly reduces (by 50 - 60% on average) the number of unqualified fractional products generated during the start-up period, reduces (by 50 - 60% on average) the cost of heat and energy for their repeated distillation to obtain the qualified products, and also allows maintaining the regulatory temperatures at which the selection of products is carried out, that ultimately improves their final quality.

Maintaining the temperature in the collecting tank at 300 - 360°C allows obtaining heating fuel with a flash-point of 60 - 90°C, that proves the absence of light fractions in the collecting tank. Condensation of paraffin vapors in the dewaxer at a temperature of 180 - 300 oC allows obtaining diesel fuel with pre-determined properties.

So, we obtain summer grade of diesel fuel at 300 °C, i.e. with a freezing point of 0°C, and we obtain winter grade of diesel fuel at 180 °C, with a freezing point of minus 35 °C. Besides that, by this temperature interval (180 - 300 °C) it is possible to regulate the amount of diesel fuel to be taken, removing or adding paraffins from/to it.

Maintaining the temperature of 160 - 220 °C in the rectification column cube allows regulating the contents of light fractions, achieving a regulatory value of the diesel fuel flash point of 40 - 62 °C.

Maintaining the temperature of 35 - 100 °C at the top of the rectification column allows obtaining gasoline with a specified fractional composition and a final boiling point not exceeding 215 °C, that is in accordance with accepted standards. Maintaining the gasoline temperature within 20 - 35 °C after condensation in the heat exchanger allows reducing the loss of vapors of gasoline and hydrocarbon gas, coming out of the heat exchanger together with gasoline, by 2 - 3%.

Table 1 shows data on the quality of gasoline produced by this method, implemented on this device.

**Table 1.** Data on the quality of gasoline

| No. | parameter name | testing method | standard | result |
|-----|----------------|----------------|----------|--------|
| 1 | Octane number | GOST 0226 | - | 86.8 |

(continued)

| No. | parameter name | testing method | standard | result |
|---|---|---|---|---|
| 2 | Final boiling point, not exceeding, °C | GOST 2177 | 215.0 | 179.0 |
| 3 | Residual in the test flask, %, not exceeding | GOST 2177 | 2.0 | 1.0 |
| 4 | Sulphur concentration, %, not exceeding | GOST 19121 | 0.05 | 0.045 |
| 5 | Benzene volume ratio, %, not exceeding | GOST 29040 | 5.0 | 2.76 |
| 6 | Copper-plate test | GOST 6321 | class 1 | hold |
| 7 | Saturated vapor pressure | GOST 1756 | 45.0 - 70.0 | 42.6 |
| 8 | Lead concentration, $g/dm^3$, not exceeding | GOST R51942 | N/A | N/A |
| 9 | Density at 15 °C, $kg/dm^3$ | GOST R51069 | 725.0 - 780.0 | 726.4 |

As it can be seen from the data given in Table 1, the properties of gasoline produced by this method, implemented on this device, meet the standards.

Table 2 shows data on the quality of diesel fuel produced by this method, implemented on this device.

**Table 2.** Data on the quality of diesel fuel.

| No. | Parameter name | Parameter name | Standard | Result |
|---|---|---|---|---|
| 1 | Fractional composition: 50% is distilled at a temperature 95% is distilled at a temperature | GOST 2177 GOST 2177 | not exceeding 280 not exceeding 360 | 238 330 |
| 2 | Mass fraction of sulphur, % | GOST 19121 | not exceeding 0.05 | 0.024 |
| 3 | Density at 20s, $kg/m^3$ | GOST 3900 | not exceeding 860 | 785.6 |
| 4 | Closed-cup flash point, °C | GOST 6356 | at least 40 | 48 |
| 5 | Existent gum, $mg/100\ cm^3$ | GOST 1567 | not exceeding 40 | 20.0 |
| 6 | Ash content, % | GOST 1461 | not exceeding 0.01 | N/A |
| 7 | Freezing point, °C | GOST 20287 | not exceeding -10 | -34 |
| 8 | Cloud point, °C | GOST 5066 | not exceeding -5 | -23 |
| 9 | Copper-plate test | GOST 6321 | hold | hold |
| 10 | Cold filter plugging point, °C | GOST 22254 | not exceeding -5 | -22 |

As it can be seen from the data given in Table 2, the properties of diesel fuel produced by this method, implemented on this device, meet the standards.

Operation of the device in a periodic (sequential) mode with at least two thermal destruction reactors, which start working in series, allows ensuring the continuous operation of the fractionation unit. This makes it possible to stabilize the temperature of the gas flues, pipelines, and equipment of the fractionation unit during the entire fractionation period.

In comparison with known technical solutions in which the fractionation unit operates intermittently (periodically), this results in heat and energy savings, which are expended during the repeated starts and stops of the device. The quality of the finished goods at the outlet is also improved.

The execution of the portable (removable) furnace allows it to be disconnected from the thermal destruction reactor upon completion of the thermal destruction process and, without letting it cool, be connected to the next thermal destruction reactor. At the same time, fuel economy is obtained for the furnace reheating, as if it cools down together with the reactor. Due to this, the furnace lining is not exposed to large temperature drops, that usually occurs during cooling, and the service life of the lining increases as well.

After the furnace disconnecting from the reactor, the latter is put into a cooling mode and can be cooled by air supplied from the burner gas-blower. Due to the fact that the thermal destruction reactor is cooled without a furnace having a large mass of lining, the time of the process of cooling to 50°C, at which it is possible to open the hatch and unload the coke, decreases by 2 - 2.5 times.

As it is shown by the results obtained in experimental studies, the vapor-gas mixture cooling to 300 - 360°C in vertically installed tubular heat exchanger, in which the vapor-gas mixture with condensed heavy hydrocarbons moves downward through the tubes in which titanium spirals are located with both one and different rotation directions, is the most effective version of the instrumentation of this process (condensation of heavy hydrocarbons) against high concentration of hydrocarbon gas in the mixture and low partial pressure of hydrocarbons.

Screw surface of the spiral not only increases the contact area of the phases, but also increases the intensity of mixing the vapor-gas mixture due to a change in the rotation direction, as it goes along the tubes, in which the spirals are installed, due to the fact that the spirals have a screw surface of different rotation directions (left and right) on one vertical branch. This, in turn, increases the heat and mass exchange efficiency by 2 - 2.5 times, and the specific surface of the phases contact is increased by 1.5 - 2 times.

The hydrocarbons collecting tank is made in the form of a cylindrical container, located horizontally. Experiments proved that the volume of the hydrocarbons collecting tank capacity should be chosen according to the condition under which the heating fuel dwelling time (hydrocarbons mixture) in it was sufficient for stripping of the light fractions. Upon that, for operation in a periodic mode, the volume of the hydrocarbons collecting tank is determined according to the formula:

$$V_p = 2 \cdot Q_p,$$

where $Q_p$ is the heating fuel capacity of the device in a single operation cycle, $m^3$/cycle; $V_p$ is the volume of the hydrocarbons collecting tank, $m^3$.

For operation in a continuous mode, the volume of the hydrocarbons collecting tank is determined according to the formula:

$$V_n = 2 \cdot Q_n,$$

where $Q_n$ is the heating fuel capacity of the device per one hour, $m^3$/hour; $V_n$ is the volume of the hydrocarbons collecting tank, $m^3$.

The hydrocarbons collecting tank is equipped with a boiler, which is heated by fuel gas. This allows obtaining the product in the form of heating fuel, which meets the standards.

The dewaxer is designed as a column apparatus, the lower part of which is filled with a mass-exchanging cap, performed in the form of titanium spirals loaded in bulk (irregular cap) with a spiral length of 0.1 - 0.2 m, or in the form of spirals collected in cassettes (regular cap) with a spiral length of up to 1 m, having a free opening of 90 - 93%.

At the top of the dewaxer, a shell-and-tube heat exchanger is installed, which acts as a dephlegmator. Hydrocarbon vapors rise up the dewaxer tubes, which contain titanium spirals of both one and different rotation direction, through which the paraffins are condensed and drain down, creating a reflux stream, which, in its turn, irrigates the mass-exchanging cap. Simultaneously, the shell-and-tube heat exchanger serves as a column irrigation. Cooling water is supplied to the annular space of the shell-and-tube heat exchanger.

As experiments have shown, such a dewaxer design, in which reflux (cap irrigation) is formed inside the column, rather than being supplied from the outside, is the most preferable. In this case, the gas-vapor mixture contains a large amount of inert hydrocarbon gas (up to 15 - 20%), which lowers the partial pressure of hydrocarbon vapors and worsens condensation conditions.

The rectification column is also equipped with a dephlegmator and a mass-exchanging cap, and a boiler, heated by fuel gases, is installed in the bottom of the column cube to steam the light fraction of the vapor-gas mixture.

Heterogeneous catalysis (contact catalysis) characterizes the change in the rate of chemical reaction under the action of catalysts forming an independent phase and separated from the reacting substances by the boundary line. The most common case is when a solid catalyst (contact) accelerates the reaction between reactant gases or a reaction in solution. The catalytic reaction usually proceeds on the surface of solid catalyst and is due to the activation of the reactants molecules upon interaction with the surface. Therefore, heterogeneous catalysis requires the adsorption of the reaction mixture components from the volume phase on the catalyst surface.

As the performed experiments have shown, the performance of a mass-exchanging cap in the dewaxer and the rectification column on the basis of a heterogeneous catalyst made in the form of titanium spirals which simultaneously serve as a catalyst for the thermal destruction process, as well as titanium spirals loading into the furnace fuel collecting tank allows increasing the yield of light fractions by 3 - 5%. The free opening of the cap in the columns is 90 - 93%, that insignificantly affects the growth of the hydraulic resistance in the system. The pressure at which the process of thermal destruction is carried out is only 0.01 - 0.07 MPa, that increases the process safety.

**BRIEF DESCRIPTION OF THE DRAWINGS**

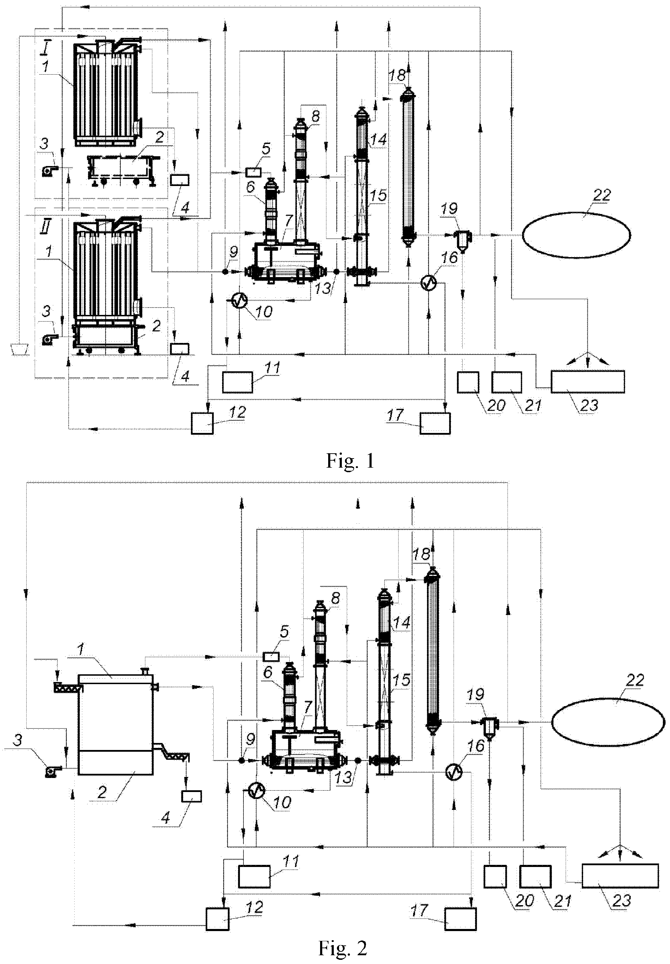

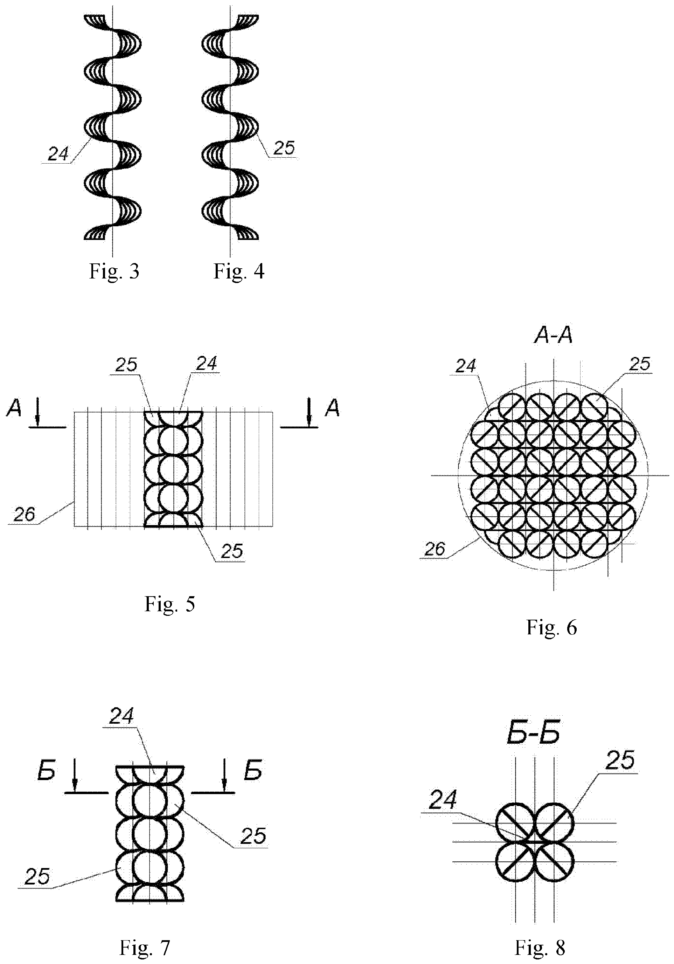

The technical solution is explained in Fig. 1 - Fig. 8, where: Fig. 1 shows a periodic scheme (periodic mode) of the device, on the basis of which the thermal destruction method is implemented; Fig. 2 shows a continuous scheme (continuous mode) of the device, on the basis of which the thermal destruction method is implemented; Fig. 3 shows spiral strands of the left rotation direction; Fig. 4 shows spiral strands of the right rotation direction; Fig. 5 shows a cassette with spiral strands which is placed in the heat exchangers tubes; Fig. 6 shows a section view of A-A of Fig. 5; Fig. 7 shows a bundle of spiral strands which is placed in the heat exchangers tubes; Fig. 8 shows a section view of B-B of Fig. 7.

On fig. 1 - fig. 8 the following notations are agreed:
I is a reactor operation unit in the cooling mode; II is a reactor operation unit in the heating mode; (dotted lines indicate frontiers of I and II units); 1 is a thermal destruction reactor; 2 is a furnace; 3 is a burner; 4 is a coke collector; 5 is a catalyst column; 6 is a heat exchanger for lowering the gas-vapor mixture temperature; 7 is a collecting tank with a boiler; 8 is a dewaxer; 9, 13 are the dampers; 10 is a heat exchanger for heating oil cooling; 11 is a heating oil collector; 12 is a fuel tank for the burner; 14 is a rectification column dephlegmator; 15 is a rectification column; 16 is a heat exchanger for diesel fuel cooling; 17 is a diesel fuel collector; 18 is a heat exchanger for gas cooling and gasoline and water vapors condensing; 19 is gas and water separator; 20 is a water collector; 21 is a gasoline collector; 22 is a gas collector (gasholder); 23 is a tank of circulating water; 24 is a titanium spiral strand of the left rotation direction; 25 is a titanium spiral strand of the right rotation direction; 26 is a cassette with titanium spiral strands.

**DETAILED DESCRIPTION OF THE ESSENCE OF THE INVENTION**

A. Periodic mode implementation (Fig. 1).

In the periodic mode of the device two units are involved: I is a unit of thermal destruction reactor operation in the cooling mode; II is a unit of thermal destruction reactor operation in the heating mode.
Landfill PE and PP, pre-ground and purified from polyvinylchloride, polyethylenterephtalate, cellulose, rags, rubber impurities and other wastes by flotation, are loaded into one of the thermal destruction reactors 1 (Fig. 1) through the upper hatch (not indicated on Fig. 1 - Fig. 8). At the bottom of each thermal destruction reactor 1 there is a portable (removable) furnace 2 with a fuel burner 3, which can operate on both liquid and gaseous fuels of its own production.
Then the contents of the thermal destruction reactor 1 of unit I (plastic waste in the form of PE and PP) are heated at a rate of 1.5 - 4 oC/minute. Fuel gases with a temperature of 600 - 900°C pass through the heat pipes (not indicated on Fig. 1 - Fig. 8) of the thermal destruction reactor 1 and enter the boiler of the cube 7, and then the boiler (not indicated on Fig. 1 - Fig. 8) located in the cube of the rectification column 15.
When the temperature in the cube of the rectification column 15 reaches the values of 160 - 220 ° C, the supply of fuel gases from the thermal destruction reactor 1 of unit I is stopped by means of damper 13 closing. When the temperature within 300 - 360 °C in the cube 7 is reached, the supply of fuel gases is stopped by means of damper 9 closing.
In the thermal destruction reactor 1 at a temperature of 260 - 300 °C the process of plastics destruction begins. Plastics destruction products in the form of hydrocarbons vapor-gas mixture are loaded from the thermal destruction reactor 1 into a catalyst column 5, which is a tubular apparatus with flanges, loaded with a catalyst - titanium spirals in the cassette and then into the heat exchanger 6.
When the vapors temperature reaches 300 - 360 oC, circulating water is supplied to the heat exchanger 6 for hydrocarbons vapor-gas mixture cooling. With the help of changing the water flow in the heat exchanger 6, the temperature in the cube 7 is maintained in the range of 300 - 360 °C.
The hydrocarbons vapor-gas mixture enters the cube 7, where high-boiling hydrocarbons pass to the liquid phase from it. Then the vapor-gas mixture enters the dewaxer 8, which is a column apparatus, the bottom of which is loaded with a mass-exchanging cap, and a shell-and-tube heat exchanger acting as a dephlegmator is installed on the top.
Circulating water is supplied to the annular space of the heat exchanger (not indicated on Fig. 1 - Fig. 8), and hydrocarbons (paraffins) condensation is carried out in the heat exchanger tubes. Condensed paraffins return back to the cube 7. The temperature of the vapors at the outlet of the dewaxer 8 is maintained in the range of 180 - 300 °C by changing the water supply to the dephlegmator.
Then, the hydrocarbon vapors enter the rectification column 15, where they are separated into gasoline and diesel fractions. Diesel fraction enters the diesel fuel collector 17 from the bottom of the column 15 through the heat exchanger 16, cooled by circulating water. The gasoline fraction in the form of vapor and the hydrocarbon gas from the top of the distillation column 15 go to the heat exchanger 18 for gas cooling and gasoline and water vapors condensing.
The diesel fuel quality (flash point, fractional composition) is regulated by the temperature of the rectification column 15 bottom, which is 160 - 220 °C.
The gasoline fraction quality (density, fractional composition, and end of boiling) is regulated by the temperature at the outlet from the rectification column 15. The temperature of the top of the rectification column is maintained in the range of 35 - 100 °C by supplying water to the dephlegmator 14 of the rectification column 15. Dephlegmator 14 is a shell-and-tube heat exchanger, into the annular space of which the circulating water is supplied, and in the tube space of the dephlegmator 14, high-boiling hydrocarbons are condensed.

Gasoline fractions vapors and water are condensed in the heat exchanger 18, which is cooled by circulating water. Water and hydrocarbon gas are separated from the gasoline in gas and water separator 19. The hydrocarbon gas that does not condense is sent to the burner 3 to heat the thermal destruction reactor 1, and the excess hydrocarbon gas is collected in a gas collector (gasholder) 22.

Water and gasoline enter into the corresponding collectors 20 and 21. The heavy fraction (heating fuel) is collected in the cube 7 and at the end of the thermal destruction process, when hydrocarbon gas formation ceases, it is discharged to the heating fuel collector 11 through the heat exchanger 10, which is cooled by water.

The process of plastics destruction is terminated at a temperature of 450 - 480 °C. The fuel supply to the burner is disconnected and the reactor 1 is switched to the cooling mode.

Fig. 1 shows that the thermal destruction reactor 1 of unit I is switched to the cooling mode. The portable (removable) furnace 2 of unit I is disconnected from the reactor by putting it onto the wheels (not indicated on Fig. 1-Fig. 8) and its diversion for separate cooling of the thermal destruction reactor 1 of unit I. Then the portable (removable) furnace 2 (still hot) of unit I is connected to the cool (not heated) thermal destruction reactor 1 of unit II.

After cooling the reactor, the solid coke residue which remains at the bottom of the thermal destruction reactor 1 of unit I, is discharged into the coke collector 4 through the lower hatch of the thermal destruction reactor 1 of unit I.

While the process of thermal destruction proceeds in the thermal destruction reactor 1 of unit I, the thermal destruction reactor of unit 1 is loaded with plastics waste and prepared for start-up. As soon as the fuel supply to the burner 3 of unit I of the thermal destruction reactor 1 of unit I is switched off, the burner 3 of unit II of the thermal destruction reactor 1 of unit II is immediately switched on after connection of the portable hot furnace 2 of unit I and the process of destruction in the thermal destruction reactor 1 of unit I is started. Upon that the temperature in cube 7 and cube of the rectification column 15 is maintained at the same level as in the previous cycle.

After carrying out the process of thermal destruction in the thermal destruction reactor 1 of unit II, it is put into a cooling mode, and the thermal destruction reactor 1 of unit I is loaded with plastics waste, and a new cycle is carried out: "thermal destruction - cooling - dry residue unloading - plastics waste loading".

## B. Continuous mode implementation (Fig. 2)

Landfill PE and PP, pre-ground (or granulated), purified from polyvinylchloride, polyethylenterephtalate, cellulose, rags, rubber and other impurities by flotation, are continuously loaded with a screw feeder (not indicated on Fig. 1 - Fig. 8) into the thermal destruction reactor 1, equipped with a furnace 2 and a fuel burner 3, which can work on both liquid and gaseous fuels of its own production.

The fuel burner 3 is switched on and the device is put into the operating temperature mode. To accelerate the predetermined mode of the device, the fuel gases generated during fuel combustion are sent to the cube 7 and rectification column 15 boiler.

Operating temperatures in the device are maintained in the following ranges: in the thermal destruction reactor 1 within 450 - 480 °C (regulated by changing the fuel supply); in the cube 7 within 300 - 360 °C (regulated by changing the water supply to the heat exchanger 6); the temperature of the output of the vapor-gas mixture from the dewaxer 8 is within 180 - 300 °C (regulated by the supply of water to the dewaxer dephlegmator 8); in the cube of rectification column 15 within 160 - 220 °C (regulated by changing the temperature of the vapor-gas mixture after the dewaxer and the top of the rectification column 15); the temperature of the output of the vapor-gas mixture from the rectification column 15 - 35 is 100 °C (regulated by the supply of water to the dephlegmator 14).

When the operating temperatures in cube 7 and in rectification column cube 15 are reached, the supply of fuel gases to the boiler (not indicated on Fig. 1 - Fig. 8) is switched off by closing dampers 9 and 13. Upon continuous operation mode, the coke is taken continuously from the reactor 1 by means of a screw. Heating fuel draining from cube 7 is carried out continuously. Upon that, the reference level of the liquid in cube 7 is maintained with the level regulator.

All other operations of the device in continuous mode are similar to the operation of the device in the periodic mode. The device is equipped with a closed circuit of circulating water and a water tank 23.

Heating fuel and diesel fraction supplied to fuel tank 12, as well as hydrocarbon gas, are used as a fuel for burners 3. Gas from gasholder 22 can be used in other power plants.

According to this method, a catalyst in the form of titanium spirals obtained by twisting titanium strands with a width of 5 - 20 mm and a thickness of 0.5 - 1.5 mm is used in the process of thermal destruction. The diameter of the spiral is 10 - 30 mm, the length is 0.1 - 1 m, and the spiral pitch is 10-40 mm. The surface of titanium spirals is pretreated with 1 - 2% hydrofluoric acid.

Titanium spirals are loaded into the catalyst column 5, the heat exchanger 6, the cube-collector 7, the dewaxer 8, and the distillation column 15.

Before being loaded into the column apparatus, the titanium spirals are collected in cassettes 26 (Fig. 5 - Fig. 8). The diameter of the cassette 26 is equal to the inner diameter of the apparatus. As can be seen from Fig. 5 - Fig. 8, the spirals are placed in a cassette parallel to each other and parallel to the side generating line of the cassette. In other words, if the cassette is placed vertically, the spirals are placed vertically as well, if the cassette is placed horizontally, the spirals are also placed horizontally.

Location of the spirals is predominantly vertical in the column apparatus. Cassette 26 is placed horizontally in the catalyst column 5. Upon that, for the screw cap, it is no matter how to place it, horizontally or vertically. Moreover, for small values of the apparatus diameters (up to 1,000 mm), it is more convenient to load the cap in a "standing position", i.e. a vertical cassette arrangement occurs.

A heterogeneous catalyst is used as a catalyst, in the form of titanium strands twisted in spirals, each spiral pre-twisting in one or in different directions, producing in the second case a spiral of left and right rotation, using strands twisted all in one or in different directions each.

Spirals are placed twisted in one direction each, or with rows interleaving with right and left rotation direction each. Passing through such a layer of spirals the vapor-gas flow is divided into a number of jets. In the second case, these jets twist either in one or in different directions in contact with spirals, intersect with each other, mix and constantly change the direction of rotation, which intensifies the process of heat and mass exchange. Upon that, both regular and irregular placements of spirals (bundles) are used in the section of the apparatus or device (in the column apparatus, cassette, tubes of heat exchangers).

Combining the spirals with the alternation of unidirectionality and multi-directionality, it is also possible to control the motion direction, speed, vapor-gas flow concentration, and the heat and mass exchange process rate in the catalyst column.

It was found that the above process is most effective when the design parameters, material and surface treatment facilities of the catalyst are reported. Beams of up to 3 or 4 spirals of a different rotation direction are loaded to the tubes of the heat exchangers (Fig. 5 - Fig. 8).

It was found that the above process is most effective when the design parameters, material and surface treatment modes of the heterogeneous catalyst are reported. The preheating of the collecting tank 7 and the rectification column cube 15 with fuel gases, as well as the use of two or more reactors with removable (portable) furnaces, allows speeding up the process and ensuring the continuity of the hydrocarbons fractionation process. At the same time, hydrocarbons fractionation (separation) in four stages increases the clarity of separation and, consequently, the quality of the final products which comply with the current standards.

## BEST IMPLEMENTATION OF THE INVENTION

Continuous mode of plastics waste processing is used. A catalyst in the form of titanium spirals obtained by twisting titanium strands with a width of 10 mm and a thickness of 1 mm is used for thermal destruction. The diameter of the spiral is 10 mm, the length is 0.5 m, and the spiral pitch is 20 mm. The surface of titanium spirals is pretreated with 1% hydrofluoric acid.

Titanium spirals are loaded into the catalyst column 5, the heat exchanger 6, the cube-collector 7, the dewaxer 8, and the distillation column 15. Before loading into the column apparatus, titanium spirals are also collected in cassettes 26. The diameter of the cassette is equal to the diameter of the apparatus. In the column, the cassettes are installed vertically on top of each other to the full height of the packed column section. Beams of 4 spirals of a different rotation direction are loaded to the tubes of the heat exchangers (Fig. 5 - Fig. 8).

The volume of the collecting tank is determined from the correspondence:

$$V_n = 2 \cdot Q_n,$$

where $Q_n$ is the heating fuel capacity of the device per one hour, m³/hour; $V_n$ is the volume of the collecting tank, m³.

The defined values appeared to be equal: $Q_n$ is the heating fuel capacity of the device per one hour, $Q_n = 0.125$ m³/hour; then $V_n = 2 \cdot Q_n = 0.25$ m³.

The screw feeder is started and the pre-arranged landfill PE and PP are supplied to the thermal destruction reactor 1. The fuel burner 3 is turned on, using heating or diesel fuel of its own production as fuel. Fuel gases from the burner at a temperature of 700 oC are sent to the boiler of the cube 7 and the rectification column 15. Water is supplied to the heat exchanger 18.

Then the contents of the thermal destruction reactor 1 (plastic waste in the form of PE and PP) are heated at a rate of 3 oC/minute. When the temperature in the cube of the rectification column 15 reaches the values of 180 oC, the supply of fuel gases from the thermal destruction reactor 1 is stopped by means of damper 13 closing.

When the temperature in the cube 7 reaches 340 oC, the supply of fuel gases to the cube boiler is stopped by means of damper 9 closing. When the vapors temperature reaches 340 oC, circulating water is supplied to the heat exchanger 6 for hydrocarbons vapor-gas mixture cooling. With the help of changing the water flow in the heat exchanger 6, the temperature in the cube 7 is maintained within 340 oC.

When the temperature reaches 240 oC after the dewaxer, water is supplied to the dephlegmator. When the temperature of the top of rectification column 15 reaches 58 oC, water is supplied to the dephlegmator. When the operating temperature of 470 oC is reached in the reactor 1, the fuel burner is transferred to work on a hydrocarbon gas of its own production.

The process control mode is transferred from manual to automatic.

The diesel fuel quality (flash point, fractional composition) is regulated by the temperature of the rectification column 15 bottom, which is 180 oC.

The gasoline fraction quality (density, fractional composition, and end of boiling) is regulated by the temperature at the outlet from the rectification column 15. The temperature of the top of the rectification column is maintained in the range of 58 oC by supplying water to the dephlegmator 14 of the rectification column 15. Gasoline fractions vapors and water are condensed in the heat exchanger 18, which is cooled by circulating water.

Water and hydrocarbon gas are separated from the gasoline in gas and water separator 19. The hydrocarbon gas that does not condense is sent to the burner 3 to heat the thermal destruction reactor 1, and the excess hydrocarbon gas is collected in a gas collector (gasholder) 22.

Water and gasoline enter into the corresponding collectors 20 and 21. Diesel fuel enters the collector 17 through the heat exchanger 16, which is cooled by water. The heavy fraction (furnace fuel) from the cube 7 is discharged to the heating fuel collector 11 through the heat exchanger 10, which is cooled by water. The coke is taken from the reactor 1 continuously by means of a screw into a coke collector 4.

Specific fuel costs for the exemplary implementation of the invention are 70%, water 50%, and the yield of light products (gasoline and diesel fuel) is higher by 8% compared to the prototype.

## INDUSTRIAL APPLICABILITY

Thus, improvement of the quality and increase in the yield of finished products - gasoline and diesel fuel - is achieved by means of the use of efficient designs, operating parameters and procedures during the main stages of the invention implementation, in particular at the stage of fractionation. The preheating of the collecting tank 7 and the rectification column cube 15 with fuel gases, as well as the use of two or more reactors with removable (portable) furnaces, allows speeding up the process and ensuring the continuity of the hydrocarbons fractionation process. At the same time, hydrocarbons fractionation (separation) in four stages increases the clarity of separation and, consequently, the quality of the final products which comply with the current standards.

The method proposed is more cost-effective than the prototype method, since the specific fuel costs for the process are 70 - 75%, and water is 50 - 60% compared to the prototype method and apparatus. Besides, in the developed technical solution the yield of light products (gasoline and diesel fuel) is 5 - 8% higher, the quality of gasoline complies with GOST R 51105-97 "Unleaded gasoline", and the diesel fuel complies with GOST 305-82 "Diesel fuel L-0.05-40".

## Claims

1. Method of thermal destruction of polyethylene and polypropylene waste, implemented in both periodic and continuous modes of the above-mentioned plastics waste processing, and which includes loading of pre-crushed and impurities-free waste of the above-mentioned plastics in a pyrolysis furnace containing a thermal destruction reactor and a furnace with a fuel burner, their heating with a fuel burner in a thermal destruction reactor within 450 - 480 °C, thermal decomposition of the initial crushed and purified raw material in the thermal destruction reactor (1) without air access, resulting in the thermal destruction of the vapor-gas mixture at the outlet from the reactor, feeding it to the catalyst column, (5) besides, after the degradation products fractionating, gas and liquid fuel are obtained, subsequent cooling of the fractionated products in heat exchangers and unloading coke from the thermal destruction reactor, wherein the gasoline and water formed are separated due to the differences in their densities, and separation of the liquid components and hydrocarbon gas from the vapor-gas mixture of hydrocarbons formed in the process of thermal destruction is carried out in stages, *characterized in that* in periodic mode no less than two thermal destruction reactors are used, which are used in sequence during the operation, and in this case firing with a fuel burner is performed which is a portable one, and after disconnecting the hot furnace (2) from the thermal destruction reactor, the latter is put into cooling mode with a possibility of cooling with air supplied from the burner gas-blower or fan, simultaneously connecting still hot furnace to the second cold thermal destruction reactor, during the thermal destruction reactor heating, preheating and maintaining the preset temperature is ensured in the boiler of the hydrocarbon collecting tank and in the boiler of the rectification column cube (7) by supplying fuel gases, formed from the fuel burning in thermal destruction reactor fuel burner, wherein the supply of fuel gas, formed from the fuel burning, is stopped when temperature in the collecting tank (4) reaches 300-360 °C, and in the rectification column tank the temperature is maintained within 160-220 °C and controlled by changing the temperature of the vapor-gas mixture after dewaxer (8) and at the top of the rectification column, (15) wherein the separation or fractionation of the liquid components from the vapor-gas mixture of hydrocarbons formed in the process of thermal destruction is carried out in four stages, where at the first stage, high-boiling components of the vapor-gas mixture are condensed in the heat exchanger, cooled with water at a temperature of 300-360 °C, which is regulated by changing the water supply to the heat exchanger, at the second stage, paraffins are condensed in the column serving as the dewaxer, at a temperature of 180 - 300°C, which is regulated by feeding water to the dewaxer dephlegmator, wherein the condensed high-boiling hydrocarbons and paraffins forming the heating fuel fraction are maintained in the collecting tank at the temperature of 300-360 °C, providing stripping of light fractions, at the third stage, the fractions of gasoline and diesel fuel are divided in the rectification column, providing the temperature mode within 35-100 °C at the top of the rectification column, and 160-220 °C at the bottom of the rectification column, at the fourth stage, gasoline and water vapors are condensed in the heat exchanger at the temperature of 20-3 5 °C upon that the heterogeneous catalyst is used as a catalyst in the form of titanium strands twisted in spiral, besides, each spiral is returned in one or in different directions, forming in the secon case left and right rotation spirals, besides strands are used turned with a spiral in one direction each, or turned all with spirals in different directions each, titanium strands are placed in the collecting tank, in the tubes of the heat exchanger, where high-boiling components of a vapor-gas mixture are condensed, in the tubes of the dewaxer dephlegmator and in the tubes of the rectification column dephlegmator.

2. Method according to claim 1, *characterized in that* supply of fuel gases with a temperature of 600-900 °C to the boiler of hydrocarbons collecting tank and to the rectification column cube is carried out.

3. Method according to claim 2, *characterized in that* the volume of the collecting tank is selected according to the condition under which the heating fuel dwelling time in the form of hydrocarbons mixture in it was sufficient to ensure complete stripping of the light fractions.

4. Method according to claim 2, *characterized in that* operating in a periodic mode, the volume of the hydrocarbons collecting tank is determined from the correspondence

$$V_p = 2 \cdot Q_p,$$

where $Q_p$ is the heating fuel capacity of the device in a single operation cycle, $m^3$/cycle,
$V_p$ is the volume of the hydrocarbon collecting tank, $m^3$.

5. Method according to claim 2, *characterized in that* operating in a continuous mode, the volume of the hydrocarbons collecting tank is determined from the correspondence

$$V_n = 2 \cdot Q_n,$$

where $Q_n$ is the heating fuel capacity of the device per one hour, $m^3$/hour,
$V_n$ is the volume of the hydrocarbons collecting tank, $m^3$.

6. Method according to claim 1, *characterized in that* the titanium strands are used with a width of 5 - 20 mm, a thickness of 0.5 - 1.5 mm, which in the twisted form have a diameter of 10 - 30 mm, a length of 0.1 - 1 m, with a spiral pitch of 10 - 40 mm.

7. Method according to claim 6, *characterized in that* the titanium spirals are preliminary treated during 0.5 - 1 hour by contacting with 1 - 2% hydrofluoric acid at a temperature of 30 - 40 °C.

8. Method according to claim 1, *characterized in that* the titanium strands twisted in spiral are used as a mass-exchanging caps in the dewaxer and in the rectification column.

9. Method according to claim 1, *characterized in that* the dewaxer is made in the form of a column apparatus, the bottom of which is filled with both regular and irregular mass-exchanging cap, made in the form of titanium spirals and having a free opening of 90 - 93%.

10. Method according to claim 9, **characterized in that** the irregular mass-exchanging cap is performed in the form of titanium spirals loaded in bulk, with a spiral length of 0.1 - 0.2 m.

11. Method according to claim 9, **characterized in that** the regular mass-exchanging cap is performed in the form of titanium spirals collected in cassettes, with titanium spirals length of up to 1 m.

12. Method according to claim 1, **characterized in that** on the top of the dewaxer a shell-and-tube heat exchanger is installed, which is used as a dephlegmator, and at the hydrocarbon vapors lifting up the dewaxer tubes where titanium spirals of different rotation direction are pre-arranged, provides for paraffins condensation and draining down along them are provided with creation of a reflux stream, with a help of which the mass-exchanging cap irrigation is in its turn provided.

13. Method according to claim 1, **characterized in that** the contents of the thermal destruction reactor are heated at a rate of 1.5 - 4 °C/minute.

14. Method according to claim 1, **characterized in that** pyrolysis is carried out in a thermal destruction reactor at a pressure of 0.01 - 0.07 MPa.

**Patentansprüche**

1. Verfahren zur thermischen Zersetzung von Polyethylen- und Polypropylenabfällen, das sowohl im periodischen als auch im kontinuierlichen Modus der oben genannten Kunststoffabfallverarbeitung durchgeführt wird und das das Laden von vorzerkleinertem und verunreinigungsfreiem Abfall der oben genannten Kunststoffe in einen Pyrolyseofen, der aus einem thermischen Zersetzungsreaktor und einem Ofen mit Brennstoffbrenner besteht, dessen Erwärmung durch den Brennstoffbrenner in dem thermischen Zersetzungsreaktor bei 450 - 480°C, und die thermische Zersetzung des anfänglich zerkleinerten und gereinigten Rohmaterials im thermischen Zersetzungsreaktor (1) ohne Luftzugang, umfasst. Das Verfahren führt zur thermischen Zersetzung des Dampfgasgemisches am Auslass des Reaktors und zur Einspeisung in die Katalysatorkolonne (5). Außerdem werden nach dem Fraktionieren der Abbauprodukte Gas und flüssiger Brennstoff erhalten, anschließend die fraktionierten Produkte in Wärmetauschern abgekühlt und Koks aus dem thermischen Zersetzungsreaktor entladen, wobei das gebildete Benzin und Wasser aufgrund der Unterschiede in ihren Dichten getrennt werden, und die Abtrennung der flüssigen Komponenten und des Kohlenwasserstoffgases aus dem Dampfgasgemisch der im thermischen Zersetzungsprozess gebildeten Kohlenwasserstoffe in Stufen erfolgt, **dadurch gekennzeichnet, dass** im periodischen Modus nicht weniger als zwei thermische Zersetzungsreaktoren verwendet werden, die während des Betriebs nacheinander eingesetzt werden, und in diesem Fall mit einem Brennstoffbrenner gebrannt wird, der portabel ist. Nach dem Trennen des heißen Ofens (2) vom thermischen Zersetzungsreaktor wird dieser in den Kühlbetrieb versetzt, mit der Möglichkeit der Kühlung mit Luft, die durch Brennergasgebläse oder -lüfter zugeführt wird, und gleichzeitig der noch heiße Ofen mit dem zweiten kalten thermischen Zersetzungsreaktor verbunden. Während der thermischen Zersetzung wird das Erhitzen, Vorheizen und Aufrechterhalten der voreingestellten Temperatur des Reaktors im Kessel des Kohlenwasserstoffsammeltanks und im Kessel des Würfels der Rektifikationskolonne (7) durch Zufuhr von Brenngasen, die aus dem im Brennstoffbrenner des thermischen Zersetzungsreaktors brennenden Brennstoff gebildet werden, sichergestellt, wobei die Zufuhr von Brenngas, das aus der Brennstoffverbrennung gebildet wird, gestoppt wird, wenn die Temperatur im Sammeltank (4) 300 bis 360 °C erreicht, und die Temperatur im Rektifikationskolonnentank zwischen 160 und 220 °C gehalten und durch das Ändern der Temperatur des Dampfgasgemisches nach dem Entwachser (8) und am Kopf der Rektifikationskolonne (15) gesteuert wird, wobei die Trennung oder Fraktionierung der flüssigen Komponenten aus dem Dampfgasgemisch von Kohlenwasserstoffen, die bei dem Prozess der thermischen Zersetzung gebildet werden, in vier Stufen durchgeführt wird, wobei in der ersten Stufe hochsiedende Komponenten des Dampfgasgemisches im Wärmetauscher kondensiert und mit Wasser auf eine Temperatur von 300 bis 360 °C, die durch Ändern der Wasserzufuhr zum Wärmetauscher reguliert wird, gekühlt werden, in der zweiten Stufe Paraffine in der als Entwachser dienenden Kolonne bei einer Temperatur von 180 bis 300 °C kondensiert werden, was durch Zuführen von Wasser zum Entwachser-Dephlegmator reguliert wird, wobei die kondensierten hochsiedenden Kohlenwasserstoffe und Paraffine, die die Heizkraftstofffraktion bilden, im Sammeltank auf einer Temperatur von 300 bis 360 °C gehalten werden, wodurch leichte Fraktionen abgetrennt werden, in der dritten Stufe die Fraktionen von Benzin und Dieselkraftstoff in der Rektifikationskolonne aufgeteilt werden, wobei die Temperatur von 35 bis 100 °C am Kopf der Rektifikationskolonne und von 160 bis 220 °C am Fuß der Rektifikationskolonne bereitgestellt wird, in der vierten Stufe Benzin- und Wasserdämpfe im Wärmetauscher bei einer Temperatur von 20 bis 35 °C kondensiert werden, wobei der heterogene Katalysator als Katalysator in Form von spiralförmig verdrillten Titansträngen verwendet wird, wobei jede Spirale in eine oder in verschiedene Richtungen zurückgeführt wird, wobei im zweiten Fall linke und rechte Rotationsspiralen gebildet werden, wobei Stränge verwendet werden, die mit einer Spirale in jeweils eine Richtung gedreht sind, oder alle mit Spiralen in jeweils verschiedene Richtungen gedreht werden, Titanstränge in den Sammeltank, in den Rohren des Wärmetauschers, wo sich hochsiedende Komponenten des Dampfgasgemisches kondensieren, in den Rohren des Entwachser-Dephlegmators und in den Rohren des Dephlegmators der Rektifikationskolonne, gelegt werden.

2.  Verfahren nach Anspruch 1, *dadurch gekennzeichnet,* **dass** die Zufuhr von Brenngasen von einer Temperatur von 600 bis 900 °C zum Kessel des Kohlenwasserstoffsammeltanks und zum Würfel der Rektifikationskolonne durchgeführt wird.

3.  Verfahren nach Anspruch 2, *dadurch gekennzeichnet,* **dass** das Volumen des Sammeltanks gemäß der Bedingung ausgewählt wird, unter der die Verwcilzeit des Heizbrennstoffs in Form eines darin enthaltenen Kohlenwasserstoffgemisches ausreicht, um ein vollständiges Abtrennen der leichten Fraktionen sicherzustellen.

4.  Verfahren nach Anspruch 2, *dadurch gekennzeichnet,* **dass** beim Betrieb in einem periodischen Modus das Volumen des Kohlenwasserstoffsammeltanks aus der Gleichung

$$V_p = 2 \cdot Q_p$$

bestimmt wird, wobei $Q_p$ die Kraftstoff-Heizleistung der Vorrichtung in einem einzigen Betriebszyklus ist ($m^3$/Zyklus), und $V_p$ das Volumen des Kohlenwasserstoffsammeltanks ist ($m^3$).

5.  Verfahren nach Anspruch 2, *dadurch gekennzeichnet,* **dass** beim Betrieb in einem kontinuierlichen Modus das Volumen des Kohlenwasserstoffsammeltanks aus der Gleichung

$$V_n = 2 \cdot Q_n$$

bestimmt wird, wobei $Q_n$ die Kraftstoff-Heizleistung der Vorrichtung pro Stunde ist ($m^3$/Stunde), und $V_n$ das Volumen des Kohlenwasserstoffsammeltanks ist ($m^3$).

6.  Verfahren nach Anspruch 1, *dadurch gekennzeichnet,* **dass** die Titanstränge von einer Breite von 5 - 20 mm, einer Dicke von 0,5 - 1,5 mm verwendet werden, die in der verdrillten Form einen Durchmesser von 10 - 30 mm, eine Länge von 0,1 - 1 m und die Steigung der Spirale von 10-40 mm aufweisen.

7.  Verfahren nach Anspruch 6, *dadurch gekennzeichnet,* **dass** die Titanspiralen 0,5 bis 1 Stunde durch Inkontaktbringen mit 1- bis 2%-iger Flusssäure bei einer Temperatur von 30 bis 40°C vorbehandelt werden.

8.  Verfahren nach Anspruch 1, *dadurch gekennzeichnet,* **dass** die spiralförmig verdrillten Titanstränge als Massenaustausch-Kondensatoren im Entwachser und in der Rektifikationskolonne verwendet werden.

9.  Verfahren nach Anspruch 1, *dadurch gekennzeichnet,* **dass** der Entwachser in Form einer Kolonne-Vorrichtung hergestellt ist, deren Fuß sowohl mit regulären als auch irregulären Massenaustausch-Kondensatoren ausgefüllt ist, die in Form von Titanspiralen hergestellt sind und eine freie Öffnung von 90 - 93% aufweisen.

10. Verfahren nach Anspruch 9, *dadurch gekennzeichnet,* **dass** die irreguläre Massenaustausch-Kondensation in Form von in große Menge geladenen Titanspiralen mit einer Spiralen-Länge von 0,1 - 0,2 m durchgeführt wird.

11. Verfahren nach Anspruch 9, *dadurch gekennzeichnet,* **dass** die reguläre Massenaustausch-Kondensation in Form von in Kassetten gesammelten Titanspiralen mit einer Titanspiralen-Länge von bis zu 1 m durchgeführt wird.

12. Verfahren nach Anspruch 1, *dadurch gekennzeichnet,* **dass** auf der Spitze des Entwachsers ein Rohrbündelwärmetauscher installiert ist, der als Dephlegmator verwendet wird, und an den Kohlenwasserstoffdämpfen, die die Rohre des Entwachsers anheben, Titanspiralen unterschiedlicher Drehrichtung vorab angeordnet sind, die dafür sorgen, dass Paraffine kondensieren und entlang dieser abfließen, wobei ein Rückflussstrom erzeugt wird, mit dessen Hilfe die Massenaustausch-Kondensator-Spülung wiederum bereitgestellt wird.

13. Verfahren nach Anspruch 1, *dadurch gekennzeichnet,* **dass** der Inhalt des thermischen Zersetzungsreaktors mit einer Geschwindigkeit von 1,5 - 4 °C/Minute erhitzt wird.

14. Verfahren nach Anspruch 1, *dadurch gekennzeichnet,* **dass** die Pyrolyse in einem thermischen Zersetzungsreaktor bei einem Druck von 0,01 - 0,07 MPa durchgeführt wird.

**Revendications**

1. Procédé de destruction thermique des déchets de polyéthylène et de polypropylène, mis en œuvre dans les modes à la fois périodiques et continus du traitement des déchets plastiques susmentionnés, et qui comprend le chargement des déchets pré-broyés et sans impuretés des plastiques susmentionnés dans un four de pyrolyse contenant un réacteur de destruction thermique et un four avec brûleur à combustible, leur chauffage avec un brûleur à combustible dans un réacteur de destruction thermique à 450 - 480 ° C, la décomposition thermique de la matière première broyée et purifiée initiale dans le réacteur de destruction thermique (1)
sans accès à l'air, ce qui entraîne la
destruction du mélange vapeur-gaz à la sortie du réacteur, alimentant de ce dernier la colonne de catalyseur, (5) en outre, après l'obtention du fractionnement des produits de dégradation, du gaz et du combustible liquide, le refroidissement ultérieur des produits fractionnés dans les échangeurs de chaleur et le déchargement du coke du réacteur de destruction thermique, dans lequel l'essence et l'eau formées sont séparées en raison des différences de leurs densités, et la séparation des composants liquides et du gaz hydrocarboné du mélange vapeur-gaz d'hydrocarbures formé lors du processus de destruction thermique est effectuée par étapes, *caractérisé par le fait qu'*en mode périodique, pas moins de deux réacteurs de destruction thermique sont utilisés. Ces derniers sont utilisés en séquence pendant le fonctionnement, et dans ce cas un allumage avec un brûleur à combustible est effectué. Ce dernier est portable, et
après avoir déconnecté le four chaud (2) du réacteur de destruction thermique, ce dernier est mis
en mode refroidissement avec possibilité de refroidissement avec de l'air fourni par le brûleur à gaz - soufflante ou ventilateur, reliant simultanément le four encore chaud au deuxième réacteur de destruction thermique froid, pendant le réacteur de destruction thermique, le chauffage, le préchauffage et le maintien de la température préréglée sont assurés dans le chaudière du réservoir collecteur d'hydrocarbures et dans la chaudière du cube de la colonne de rectification (7)
par l'alimentation des gaz combustibles, formés
à partir du combustible brûlant dans le brûleur de combustible du réacteur de destruction thermique, dans lequel l'alimentation en gaz combustible,
formé par la combustion du carburant, s'arrête lorsque la température dans le réservoir collecteur (4) atteint 300-360 ° C, et celle du réservoir de la colonne de rectification est maintenue entre 160 et 220 ° C et contrôlée en changeant la température du mélange vapeur-gaz après déparaffinage (8) et en haut de la colonne de rectification, (15)
dans laquelle la séparation ou
le fractionnement des composants liquides du mélange vapeur-gaz d'hydrocarbures formé au cours du processus de destruction thermique est effectué en quatre étapes. Ces dernières sont constituées de la manière suivante : -
lors de la première étape, les composants à point d'ébullition élevé du mélange vapeur-gaz sont condensés dans l'échangeur de chaleur, refroidis avec de l'eau à une température de 300-360 ° C, qui est régulée en changeant l'alimentation en eau de l'échangeur de chaleur ;

- lors de la deuxième étape, les paraffines sont condensées dans la colonne servant de déparaffineur, à une température de 180-300 ° C, qui est régulée en alimentant en eau le déphlegmateur de déparaffinage, dans lequel les hydrocarbures et paraffines condensés à point d'ébullition élevé formant la fraction de combustible de chauffage sont maintenus dans le réservoir collecteur à la température de 300-360 ° C, permettant le stripage des fractions légères;

lors de la troisième étape, les fractions d'essence et de carburant diesel sont divisées dans la colonne de rectification, fournissant le mode de température entre 35-100 ° C en haut de la colonne de rectification et 160-220 ° C en bas de la colonne de rectification ;
lors de la quatrième étape, les vapeurs d'essence et d'eau sont condensées dans l'échangeur de chaleur à la température de 20-3 5 ° C puis le catalyseur hétérogène est utilisé comme catalyseur sous forme de brins de titane torsadés en spirale, en outre, chaque spirale est renvoyée dans une ou plusieurs directions différentes, formant dans le second cas des spirales de rotation gauche et droite, en outre les brins sont utilisés tournés en spirale chacun dans la même direction, ou tous tournés en spirale chacun dans des directions différentes, les brins de titane sont placés dans le réservoir collecteur, dans les tubes de l'échangeur de chaleur, où sont condensés les composants à haut point d'ébullition d'un mélange vapeur-gaz, dans les tubes du déphlegmateur de déparaffinage et dans les tubes du déflegmateur de la colonne de rectification.

2. Procédé selon la revendication 1, *caractérisé par le fait qu*'une alimentation en gaz combustibles avec une température de 600-900 ° C à la chaudière du réservoir de collecte d'hydrocarbures et au cube de la colonne de rectification est effectuée.

3. Procédé selon la revendication 2, *caractérisé par le fait que* le volume du réservoir collecteur est sélectionné en fonction de la condition dans laquelle le temps de résidence du combustible de chauffage sous forme de mélange d'hydrocarbures dans celui-ci était suffisant pour assurer un strippage complet des fractions légères.

4. Procédé selon la revendication 2, *caractérisé par le fait qu* fonctionnant en mode périodique, le volume du réservoir collecteur d'hydrocarbures est déterminé à partir de la correspondance

$$V_p = 2 \cdot Q_p,$$

où $Q_p$ est la capacité de chauffage de l'appareil en un seul cycle de fonctionnement, $m^3$/cycle,
$V_p$ est le volume du réservoir collecteur d'hydrocarbures, $m^3$.

5. Procédé selon la revendication 2, *caractérisé par le fait que* fonctionnant en mode continu, le volume du réservoir collecteur d'hydrocarbures est déterminé à partir de la correspondance

$$V_n = 2 \cdot Q_n,$$

où $Q_n$ est la capacité de chauffage de l'appareil par heure, m3 / heure,
$V_p$ est le volume du réservoir collecteur d'hydrocarbures, $m^3$.

6. Procédé selon la revendication 1, *caractérisé par le fait que* les brins de titane sont utilisés avec une largeur de 5 à 20 mm, une épaisseur de 0,5 à 1,5 mm, qui, sous forme torsadée, ont un diamètre de 10 à 30 mm, une longueur de 0,1 à 1 m, avec un pas en spirale de 10 - 40 mm.

7. Procédé selon la revendication 6, *caractérisé par le fait que* les spirales en titane sont préalablement traitées pendant 0,5 - 1 heure par mise en contact avec 1 à 2 % d'acide fluorhydrique à une température de 30 à 40 ° C.

8. Procédé selon la revendication 1, *caractérisé par le fait que* les brins de titane torsadés en spirale sont utilisés comme bouchons échangeurs de masse dans le déparaffineur et dans la colonne de rectification.

9. Procédé selon la revendication 1, *caractérisé par le fait que* le déparaffineur est fabriqué sous la forme d'un appareil à colonne, dont le fond est rempli d'un bouchon d'échange de masse à la fois régulier et irrégulier, réalisé sous la forme de spirales en titane et ayant une ouverture libre de 90 à 93 %.

10. Procédé selon la revendication 9, *caractérisé par le fait que le* bouchon d'échange de masse irrégulier est réalisé sous la forme de spirales en titane chargées en vrac, avec une longueur de spirale de 0,1 à 0,2 m.

11. Procédé selon la revendication 9, *caractérisé par le fait que le* bouchon d'échange de masse régulier est réalisé sous la forme de spirales en titane collectées dans des cassettes, avec une longueur de spirales en titane allant jusqu'à 1 m.

12. Procédé selon la revendication 1, *caractérisé par le fait que* sur le dessus du déparaffineur, un échangeur de chaleur à calendre est installé, qui est utilisé comme déflegmateur, et au niveau des vapeurs d'hydrocarbures soulevant les tubes de déparaffinage où des spirales en titane de sens de rotation différent sont pré-disposées, assure la condensation des paraffines et les égouttements le long de ceux-ci sont pourvus par la création d'un reflux, à l'aide duquel l'irrigation par bouchon à changement de masse est à son tour assurée.

13. Procédé selon la revendication 1, *caractérisé par le fait que* le contenu du réacteur de destruction thermique est chauffé à une vitesse de 1,5 à 4 ° C / minute.

14. Procédé selon la revendication 1, *caractérisé par le fait que* la pyrolyse est effectuée dans un réacteur de destruction thermique à une pression de 0,01 à 0,07 MPa.

Fig. 1

Fig. 2

Fig. 3      Fig. 4

Fig. 5

A-A

Fig. 6

Fig. 7

Б-Б

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2106365
- RU 9301136504
- RU 2459843
- UA 2010015148202
- UA 201015148202
- UA 77844
- UA U201210850
- US 005998682 A

- US 09182647 B
- UA 22609
- UA U200612719
- UA 50431
- UA U200912544
- UA 45455
- UA U20090583

**Non-patent literature cited in the description**

- **A. S. KLINKOV ; P. S. BELYAIEV ; M. V. SOKOLOV.** Utilization and recycling of polymer materials: teaching guide. Tambov: Publishing house of Tambov State Technical University, 2005, 80